# EUROPEAN PATENT SPECIFICATION

(11) **EP 0 587 006 B1**
(45) Date of publication and mention of the grant of the patent: **16.10.1996**
(21) Application number: 93113825.9
(22) Date of filing: 30.08.1993
(51) Int. Cl.: F16K 5/20, F16K 3/20

(54) **Re-energizable valve and valve seats**
Reaktivierbares Ventil und Ventilsitze
Soupape réactivable et sièges de soupape

(30) Priority: 09.09.1992 US 942704
(43) Date of publication of application: 16.03.1994
(73) Proprietor: FMC CORPORATION, Chicago Illinois 60601 (US)
(72) Inventor: Witt, Robert L., Conroe, Texas 77385 (US); Ungchusri, Tep, Woodlands Texas 77380 (US); Bates, Roy C., Crosby, Texas 77521 (US)
(74) Representative: Altenburg, Udo, Dipl.-Phys.

(56) References cited:
- FR-A- 2 100 237
- FR-A- 2 144 136
- GB-A- 995 457
- GB-A- 1 422 012
- GB-A- 2 213 564
- US-A- 3 765 440
- US-A- 3 912 220

## Description

### BACKGROUND OF THE INVENTION

The present invention related to flow-control valves that include a plug and at least one seat against which the plug presses to close the valve.

Known valve designs include plugs that are rotatably mounted in a valve body and that have a passage through which fluid can pass when the passage is aligned with inlet and outlet pipes. One known valve design contains a ball-shaped plug, while another design includes a cylindrical plug. Such valves are closed by rotating the plug so that its solid sides block fluid flow by pressing against a seat, which in turn presses against the valve body. A similar design, known as a "gate valve," includes a moveable flat plate that slides open to align a hole in the plate with the inlet and outlet pipes. For the purpose of this application, the term "plug" is intended to refer to any object used or inserted in a valve to stop or control the flow therethrough of a liquid or gaseous fluid.

In some valve designs, either the plug or the seat or both is floatable, or otherwise moveable, so that the plug or the seat move into contact on the downstream side when the valve is closed. In some designs, the seat may be spring-loaded to press against the plug. Such floating or spring-loaded valves are designed to create tighter seals both between the plug and the downstream seat and between that seat and the valve body. In other valve designs, the plug is in a fixed position, such as mounted on a vertical trunnion, and the upstream seat is pressed against the plug to seal the valve when it is closed. Sealing may also be improved by using specially formulated greases or plastic solutions, or by requiring extremely tight tolerance matching curvatures between the plug and the seat.

However, plug-valve designs suffer from a variety of problems, notably leakage, seat failure, and difficulty in turning the valve. Upstream-seal designs often suffer from low sealing reliability, particularly when the fluid pressure is very high or very low, and can require high torque to turn the valve. Downstream-seal designs often place great stress on the seat as high fluid pressure causes the plug to slam against the seat repeatedly. Also, when not well-designed, downstream-seat designs with floating seats have the disadvantage of allowing a secondary upstream seal between the upstream seat and the plug in high-pressure conditions, which can trap fluid in the valve body, which can result in leaks or cracks due to thermal expansion of trapped body pressure. Moreover, none of those designs permit re-sealing after the valve has leaked, nor do they have the ability to seal in more than one fashion, such as both upstream and downstream.

Other useful features in a plug-type valve include: (1) bi-directionality, in which the valve can be sealed against flows in either direction, (2) in-line serviceability, in which the valve components can be removed easily, (3) capability of automation, in which the valve can be actuated or monitored automatically, and (4) bleedability, in which the valve body can be emptied of fluid, such as to prevent valve stem leakage. Prior designs often do not achieve all of those features.

In FR-A-2100237 a valve for controlling a flow with a valve body and also an interior chamber with two ports on either side is described. A plug is arranged in the interior chamber having a bore which can be aligned with the two valve ports so as to define a flow passage or to close the valve. Single seals are arranged as a proper sealing and are located at the stepped cylindrical surface of the seat contacting the valve body.

In GB 1422012 a valve is described which does not require excessive forces to move the valve member between closed and open positions and still which provides adequate loading forces on the seat ring to prevent leakage. Jacking means are provided for jacking the seat ring against the valve member, wherein loading means apply fluid pressure to said jakking means.

### SUMMARY OF THE INVENTION

It is an object of the invention, therefore, to provide new and improved valves for sealing the flow of liquid or gaseous fluids,

It is another object of the invention to provide new and improved plug-type valves that reliably seal off fluid flow, without leakage.

It is another object of the invention to provide new and improved plug-type valves that reliably seal off fluid flow, both at low and at high fluid pressure.

It is another object of the invention to provide a re-energizable plug-type valve, and methods for re-energizing a plug-type valve when it fails.

It is another object of the invention to provide new and improved valves that seal either in the upstream direction or in the downstream direction.

It is another object of the invention to provide new and improved valves that prevents high-pressure fluid from being trapped between the upstream seat and the plug, with its resultant problems.

It is another object of the invention to provide new and improved valves that reduce wear on upstream seat surfaces.

It is another object of the invention to provide a new and improved bi-. directional valve.

It is another object of the invention to provide a new and improved valve assembly that can be used with a system that automatically detect and makes efforts to cure valve leaks.

It is another object of the invention to provide a new method for operating a valve so that it seals in either the upstream or the downstream direction.

It is another object of the invention to provide new and improved devices and methods for sealing a plug-type valve in more than one fashion.

It is another object of the invention to provide new and improved valves that achieve the above goals without requiring increased torque to rotate the plug between open and closed positions.

It is another object of the invention to provide new and improved valves that can be locked in an open position, thereby preventing wear on the plug.

It is another object of the invention to provide a new and improved seat for sealing a closed plug-type valve against both downstream flow and backflow into an injection port.

It is another object of the invention to provide a new and improved seat that does not require springs yet can press against the plug in the appropriate circumstances.

It is another object of the invention to provide a new and improved seat that can seal a cavity within the valve body regardless of the pressure in the valve and whether it is fully opened or fully closed.

These objects are achieved by a valve for controlling flow with the features according to claim 1.

Preferred embodiments are defined in the dependent claims.

In an embodiment of the present invention a valve for controlling flow is used has an interior chamber, at least two ports, and a plug with a bore that can be selectively aligned with the two valve ports so as to define a flow passageway. One or more energizing channels extend through the valve casing and into contact with a seat having a pair of concentric seals adjacent to the plug. A hydraulic pump or other pressurizing means can pressurize the channel, thereby causing the seat to press against the plug, forcing it more strongly against the downstream seat to regain a lost seal or creating a new, upstream seal.

The objects are also achieved by a valve designed so as to prevent the upstream seat from sealing against the plug unless it is forced to do so by activation of the pump pressurizing the channel. The valve is dimensioned so that the sealing points between the seat and the plug describe a closed figure with a perimeter greater than that of the sealing points between the seal and the valve body.

The objects are also achieved by a seat for use with such a valve, which contains sealing means for isolating part of the surface of the seat from the flow of fluid when the seat is in use, which defines a cavity that can be used for re-energization.

The objects are also achieved by methods for re-energizing a plug valve by applying pressure to a sealed cavity to force a floating seat partially surrounding the plug against the plug, when the valve is closed, thereby blocking the valve passageway.

Other aspects of the invention will be appreciated by those skilled in the art after reviewing the following detailed description of the invention.

### BRIEF DESCRIPTION OF THE DRAWINGS

The invention, together with its objects and advantages, will be better understood after referring to the following description and the accompanying figures. Throughout the figures, a common reference numeral is intended to refer to the same element.

Figure 1 illustrates, in vertical cross-sectional view, a flow-control valve according to prior art with a unitary stem and ball-type plug, as viewed from the side of the valve.

Figure 2 illustrates, in horizontal cross-sectional view, according to Figure 1, as viewed from the top of the valve, with the ball plug in the closed position.

Figure 3 illustrates another prior art valve in a comparable view to that of Figure 1.

Figure 4 illustrates another prior art valve in a comparable view to that of Figure 1.

Figure 5 illustrates, in a comparable view to that of Figure 2, a preferred embodiment of the invention with a cube-like body cavity and telescoping seals.

Figure 6 illustrates, in close-up cross-section, one of the elastomer seals used in the embodiment of Figure 5, in its pre-installed, relaxed state.

Figure 7 illustrates, in close-up cross-section, an alternative embodiment of the seat and seal assembly shown in Figure 5.

Figure 8 illustrates the pressure and forces acting on a cross-section of the downstream seat when the valve is in a high-pressure, downstream-seated position.

Figure 9 illustrates the pressure and forces acting on a cross-section of the upstream seat when the valve is in a high-pressure, downstream-seated position.

Figure 10 illustrates, in close-up cross-section, another alternative embodiment of the seat and seal assembly shown in Figure 7, shown in the position of an upstream seat when the valve is in a high-pressure, downstream-seated position.

Figure 11 illustrates, in close-up cross-section, another alternative embodiment of the seat and seal assembly shown in Figure 10.

### DETAILED DESCRIPTION

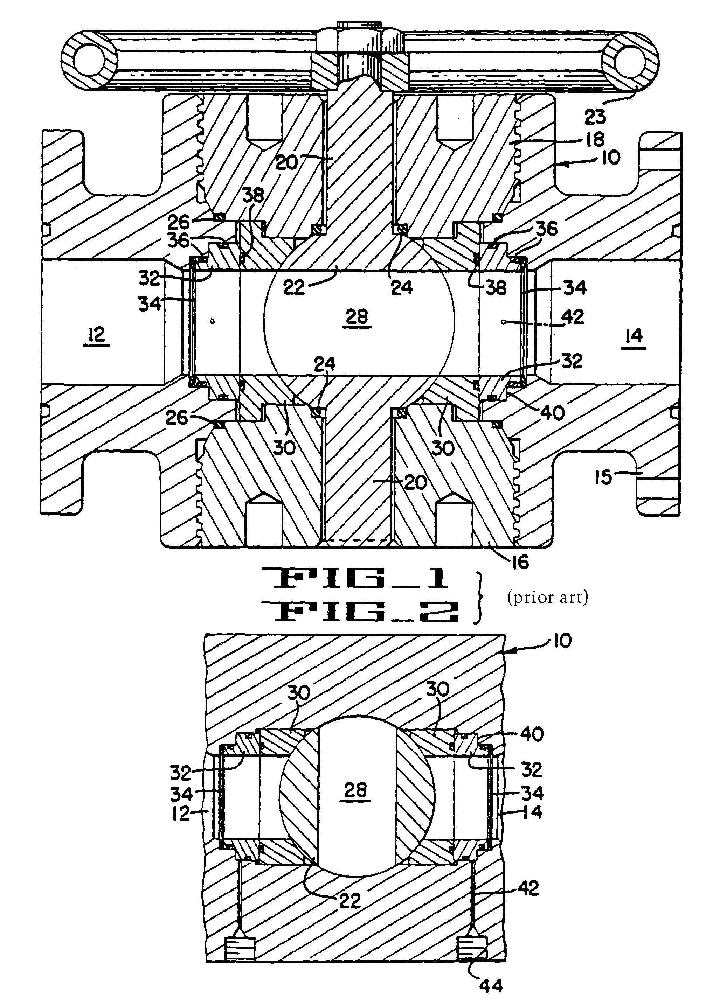

Figure 1 illustrates, in vertical cross-section, a prior art valve with a unitary stem and ball-type plug, as viewed from the side of the valve. Although all of the drawings in this description illustrate ball valves, the invention has equal application with cylindrical, gate, or other type of plug valves. Ball valves have the advantage, however, of permitting sealing without the need to make extreme efforts to control the surface finish and curvature so as to allow a tight match between the seat and the plug.

Like other valves, the valve shown in Figure 1 can be used with any fluid, such as oil, liquified natural gas, heated plastic, molten metal, cement slurry, or any other liquid or gas that is capable of flowing and being controlled by a valve. Known modifications may be necessary to adapt the valve shown to certain specialized applications.

The valve in Figure 1 includes a housing 10 through which is bored inlet and outlet ports 12 and 14. The valve is symmetrical, allowing fluid to flow either from port 12 to port 14 or from port 14 to port 12, without designating one of the ports as an inlet port upon installation. Each of the ports 12 and 14 are coupled to flow pies (not shown) with end connectors 15, which can include flanges, wing unions, or other known connection devices.

In the prior art valve of Figure 1, housing 10 is closed by threaded bottom bonnet 16 and top bonnet 18, although one or both of those bonnets can be formed integrally with housing 10. Bonnet 18 in particular allows access to the valve for servicing it and inspecting or replacing parts, without the need to remove or replace the entire valve.

Stem 20 and plug 22 are formed integrally in the embodiment of Figure 1. At least one end of stem 20 protrudes from housing 10 and is coupled to a suitable handle 23 or other actuating means, which can be turned to open and close the valve. Stem seals 24 surround stem 20 and prevent fluid from leaking between bonnets 18 or 16 and stem 20 into the atmosphere. Similarly, larger bonnet seals 26 prevent leakage between bonnets 18 and 16 and body 10.

Plug 22 is pierced by bore 28, which is typically of the same diameter as ports 12 and 14. When stem 20 and plug 22 are rotated with respect to body 10 and bonnets 16 and 18 so that bore 28 is aligned with ports 12 and 14, the valve is open to the flow of fluid in either direction. When stem 20 and plug 22 are rotated one- quarter turn, however, bore 28 becomes positioned crosswise to ports 12 and 14, and the solid sides of plug 22 obstruct the flow of fluid, as shown in the top cross-sectional view of Figure 2.

In the prior art valve of Figures 1 and 2, a pair of seats are shown on each side of plug 22, namely inner seats 30 and outer seats 32, which are formed of a strong materials, such as metal or high-performance plastic. It is also possible to design a uni-directional valve with one pair of seats on one side of plug 22. When the valve is open (as shown in Figure 1), empty of fluid, or full of fluid in a line that has equalized pressure on both the upstream and downstream sides, low-pressure energizing Belleville springs 34 press seat 30 against seat 32, which in turn presses against plug 22. Radial seat seals 36 and face-type seat seal 38 are formed of an elastomeric material. Each of those elements, inner seats 30, outer seats 32, springs 34, and seat seals 36 and 38, are positioned so as to surround ports 12 or 14. Preferably, all have bores through them that match ports 12 and 14.

Instead of the pairs of seats on each side of plug 22 shown in Figure 1, it is possible to use a single seat on each side, so that inner seat 30 and outer seat 32 is formed of one piece. However, the two-part arrangement of Figures 1 and 2 permits easy installation of the seats through bonnet 18 in the body cavity shown. Using a single seat would require that springs 34 be long enough to permit the seat to be pressed into housing 10 far enough to avoid blocking the insertion of ball 22.

The prior art valve of Figure 1 can be assembled as follows: Bottom bonnet 16 and bottom bonnet seals 24 and 26 are installed in housing 10 and tightened. Next, seals 36 are installed on outer seats 32, and the assembly is greased. The seat pockets formed in housing 10 are greased, and springs 34 are inserted, followed by outer seats 32. To assist in assembly, a seat spreader tool can be used to hold outer seats 32 apart during the remainder of the installation. Then, inner seats 30 (with seals 38 inserted) are sandwiched around plug 22, and the entire assembly can be slid down between the spread outer seats 32. Finally, the seat spreader tool is removed, and top bonnet 18 and top bonnet seals 24 and 26 are tightened into housing 10.

When plug 22 is turned to close the valve, springs 34 urge seats 30 and 32 against plug 22, to prevent leaks even in conditions of low fluid pressure. As the fluid pressure increases, however, plug 22 will be forced against downstream inner seat 30, which in turn will be forced against downstream outer seat 32. Stem 20 has a diameter slightly smaller than that of the hole in bonnets 16 and 18 through which it passes, thereby allowing stem 20 and plug 22 to "float" slightly downstream. On the downstream side, therefore, high pressure will create a metal-to-metal seal between plug 22 and inner seat 30, and another seal at seal ring 38. In addition, outer seat 32 will become compressed against annular shoulder 40, preventing overly severe compression of spring 34. Seals 36 prevent fluid from flowing between outer seat 32 and housing 10, completing the closure.

On the upstream side of the closed valve, high fluid pressure will force inner and outer seats 30 and 32 away from plug 22 in the configuration shown in Figure 1. Inner seat seal 38 has a diameter that is smaller than the diameter of the ring representing the point of average contact between ball 22 and inner seat 30, thus causing the high pressure fluid to break the seal between ball 22 and inner seat 30 first. As fluid enters the gap between ball 22 and inner seal 30, both seals 30 and 32 will move away from ball 22.

After repeated field operation, valves often develop leaks when closed, either when plug 22 is positioned in the center of housing 10 under low fluid pressure or when plug 22 is sealed against downstream seat 30 under high pressure. Although leaks can occur for a variety of reasons, some common causes of leaks include: (1) material failure in the downstream seat caused by eh pounding of plug 22 against seat 30 as a plug 22 repeatedly seats and releases under high pressure, (2) build-up of grit or particles along any of the sealing surfaces, (3) imperfect fit between the surfaces at any of the sealing surfaces, (4) worn out sealing surfaces, (5) failure of stem seal 24, or (6) deterioration of springs 34.

Although most valves must be replaced or repaired when a leak occurs, the present invention includes means for regaining the seal when the valve leaks for any of the above-mentioned causes. More particularly, the present invention includes means and methods for re-energizing the leaking valve by sealing it in a new fashion. A pair of re-energizing channels 42 extend through housing 10 to a point between a pair of seals on each outer seat. Injection ports 44, shown in cross-sectional top view in Figure 2, contain fittings to which can be attached a hydraulic pressurization means, such as a hand-held or screw-type pump unit (not shown), which can inject fluid under pressure between seals 36, thus pressing on the ringshaped portion of outer seat 32 opposing shelf 40 and urging the seats toward plug 22. When not in use, ports 44 can be closed with standard plugs (not shown).

Re-energizing channels 42 can be used in a number of ways to regain the valve seal. For low-pressure leaks--which may result, for example, from the presence of grit preventing a tight seal or a worn-out sealing surface--fluid can be injected into both channels 42 to assist in compressing the seats against plug 22. For certain high-pressure leaks--such as those resulting from damage to the downstream seat--injecting fluid into upstream channel 42 can force plug 22 more strongly against the downstream seat, perhaps regaining the downstream seal.

Alternatively, or in cases of other sorts of high-pressure leaks--for example a failure of stem seal 24--injecting fluid into upstream channel 42 even more strongly can create an actual seal between upstream seats 30 and 32 and plug 22. Such upstream sealing capability has the advantage of allowing bleeding of fluid from the valve body through the downstream outlet, which will stop fluid pressure against a leaky stem seal 24 or a leaky downstream seat seal 36. If the valve is used for upstream sealing only after a leak has been detected in the downstream seal of the stem seal, then the seal is accomplished with a surface that has been used for sealing only infrequently during the lifetime of the valve, which maximizes the probability that the seal will hold.

It is possible to create an upstream seal by re-energizing the downstream channel 42 to force downstream seats 30 and 32 to press plug 22 against upstream seats 30 and 32. That alternative, however, may be impractical in high-pressure situations, because the channel must be pressurized to a level that may be several times the pressure of the fluid upstream. Re-energizing the downstream channel 42, however, provides another alternative way of sealing low-pressure leaks.

In high-pressure cases, re-energizing downstream channel 42 to a low level will have no effect at all. Therefore, a high-pressure valve can be designed with only one type of re-energization, where both upstream and downstream channels 42 are re-energized. That design has the advantage of simplifying the use of the valve, because the user need not know or remember which channel is the upstream one and which is the downstream one, without losing the valve's bi-directional capability.

The flexibility resulting from the re-energizable feature of the invention can permit sealing in at least four different fashions: normal downstream sealing (using neither re-energization channel), enhanced downstream sealing (by re-energizing upstream), upstream sealing (by re-energizing upstream with more force), and low-pressure upstream sealing (by re-energizing downstream). There is added flexibility from the above to vary the pressure applied to the re-energizing ports. The extra flexibility provided by the invention maximizes the probability that a cure can be found for a leaky valve without depressurizing it or taking it out of service for replacement or repair.

A problem common to many plug-type valves is the need for excessively high torque to turn the valve handle, particularly when the valve is closed or being closed against a high-pressure fluid flow. The device of the invention avoids increasing that torque as the plug contacts another frictional surface, that is the upstream seat, when it is energized. An advantageous feature of the invention, however, permits use of the novel device with only ordinary torque by allowing for (or requiring) the bleeding of channels 42 before turning the handle.

Re-energizing channels 42 can also be used to trap plug 22 in the open position. Standard valve designs often can be moved from the fully open position to a partially open position by vibrations from nearby equipment or irregular fluid flow. If plug 22 is placed in a partially open, partially closed position, high-pressure fluid will erode it, ultimately resulting in leaks. The inventive design allows the user to lock plug 22 in the fully open position, preventing such damage, by re-energizing one or both of channels 42 after the valve is opened.

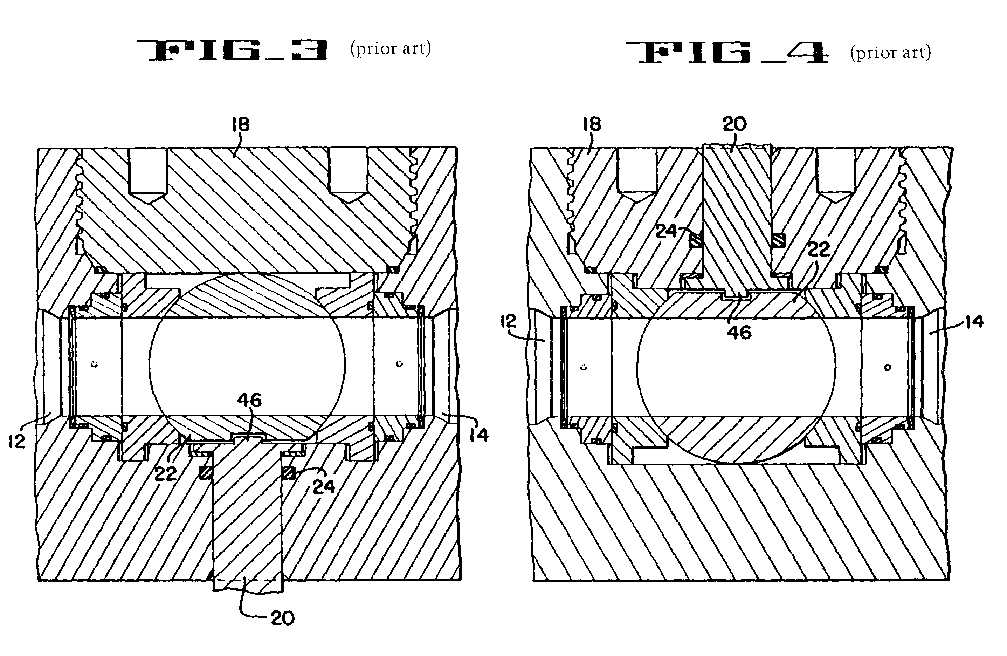

In a further embodiment of the invention, re-energization channels 42 can be connected to automatically controlled pumps, and pressure sensors in the flow channel can detect or infer the presence of leaks, thus allowing an automatic controller, such as a computer, to detect and diagnose valve leakage and to remedy the problem with a selected one or more of the courses of action identified above. No existing valve can be connected to permit such automatic leak recovery. Figures 3 and 4 illustrate alternative prior art valves, in which stem 20 is manufactured separately from plug 22 and in which there is only a single "half" of stem 20 and a single bonnet 18. Stem 20 includes tang 46, which fits into a slightly larger slot in plug 22, thus allowing plug 22 to move toward either of ports 12 and 14, while stem 20 remains fixed in position. An advantage of those embodiments is the ability to create strong stem seals 24, without the need to accommodate play in stem 20. The prior art valve of Figure 3 is designed with stem 20 on the opposite side of the single bonnet 18. That design permits access to plug 22 or any of the seats or seals without removing stem 20, the handle to which it is attached, or the stem seals, making access to the interior of the valve more simple. Figure 4 shows a design in which stem 20 extends through bonnet 18.

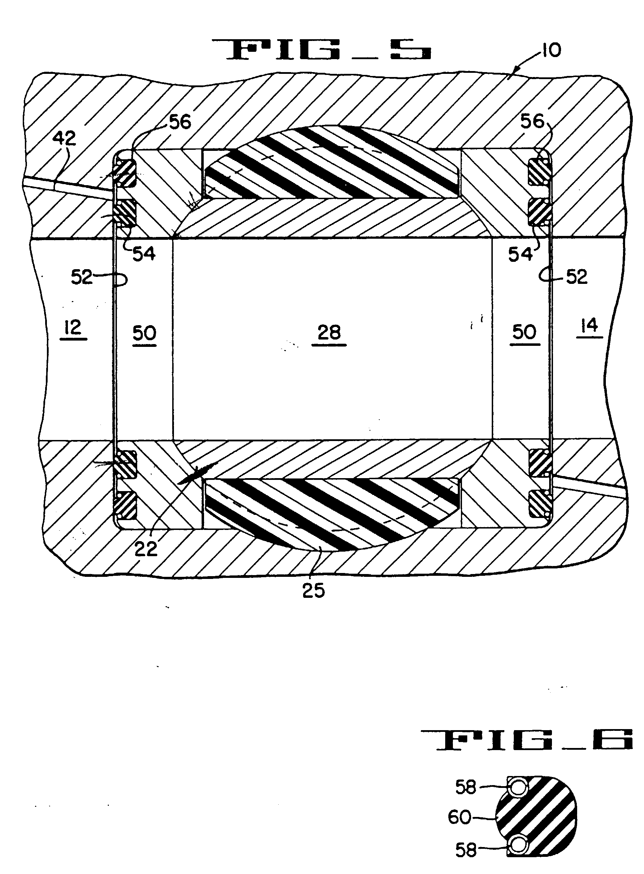

Figure 5 illustrates a top cross-sectional view of a preferred embodiment of the invention, in which the seat pairs 30 and 32 are replaced by a single seat 50 on each side of plug 22. The embodiment of Figure 5 requires many fewer parts and permits much more simple assembly than any of the previous embodiments. Housing 10 surrounds a body cavity with two flat walls 52 in a plane perpendicular to ports 12 and 14. The other four walls of the body cavity may form a cube or another shape. Plug 22 with bore 28 operates in the same fashion as described above. Volume occupiers 25 can be made of plastic or any other material suitable for filling most of the empty volume surrounding the cheeks of ball 22, to reduce the amount of fluid that will remain within housing 10 when the valve is closed.

The embodiment of the invention illustrated in Figure 5 contains two elastomer seals on each seat, smaller-diameter seal 54 and larger-diameter seal 56. As in the embodiment shown in Figures 1 and 2, seats 50 and seal 54 and 56 form annular rings surrounding ports 12 and 14. Figure 5 shows a close-up cross-sectional view of one of the seals 54 or 56, shown in its pre-installed state. Seals 54 and 56 can be made of any suitably flexible sealing material, although acceptable results have been achieved with elastomers such as hydrogenated nitrite. The seal of Figure 6 includes a pair of wire coil springs 58, which help prevent each of seals 54 and 56 from extruding from the grooves in seat 50 in which they are placed when subjected to high fluid pressure.

Nose 60 of seals 54 and 56 becomes somewhat flattened upon installation, giving seals 54 and 56 a telescoping effect and substituting for springs 34 of Figure 1. When the valve is closed under high pressure, downstream seat 50 and plug 22 compress against one of the sidewalls 52, thereby flattening noses 60 of downstream seals 54 and 56. The dimensions of the two seats 50 and the plug 22, and the clearance between the two walls 52, are set so as to allow noses 60 of upstream seals 54 and 56 to elongate almost, but not quite, to the pre-installed state shown in Figure 5 when the valve is closed under high pressure.

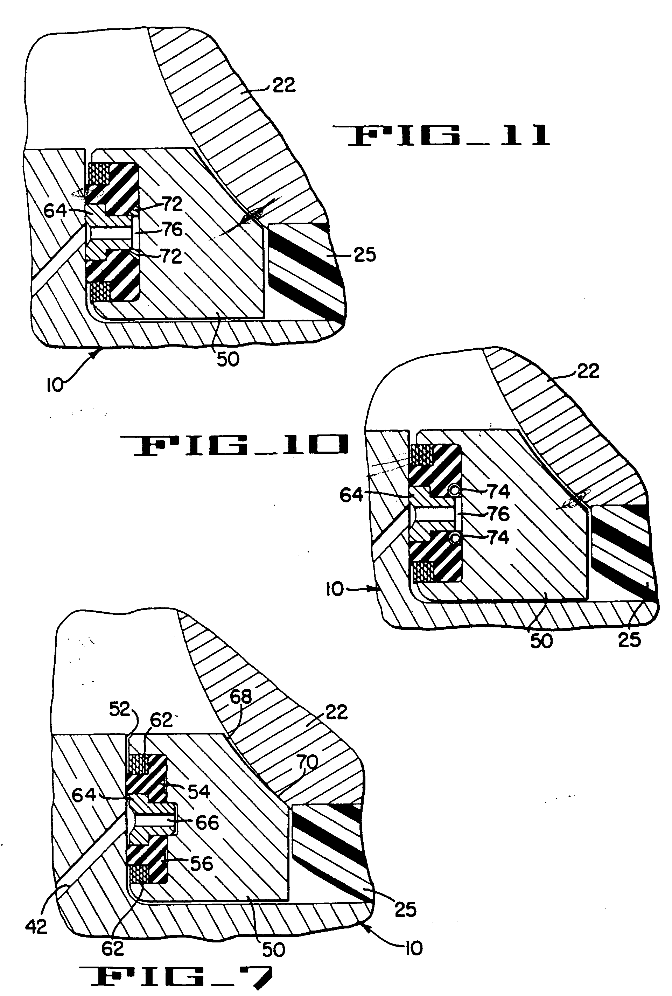

Figure 7 illustrates a cross-section of an alternative embodiment of the seat and seal assembly shown in Figures 5 and 6. Instead of coil springs 58, Figure 7 shows anti-extrusion ring 62 associated with each seal 54 and 56, which is designed to keep the seals in place. Rings 62 can be made of metal or any other high-strength material.

Spacer 64 in Figure 7 isolates inner seal 54 from outer seal 56, which function is performed by the portion of seat 50 between the two seals in Figure 5. Spacer 64 in Figure 7 also serves as an anti-extrusion ring. It is important to isolate the two seals from each other, because a single or connected pair of seals might deform excessively when subjected to high fluid pressure, which could create a leak path into re-energizing channel 42. Injection of fluid in channel 42 moves seat 50 as described above. Holes 66 are drilled in selected locations in the rounded groove shown in spacer ring 64. The groove and the holes 66 act as a sump to prevent grit or particles from blocking channels 42.

Figure 7 illustrates the state of seat 50 and plug 22 when the valve is open, closed but empty, or with equal pressure downstream and upstream. In those conditions, the noses of seal 54 and seal 56 press against face 52, causing seat 50 to move against plug 22. Preferably, the radius of the curve defining the curved portion of seat 50 that is adjacent to ball 22 is slightly larger than the radius of ball 22, thereby creating a slight crack 68 between ball 22 and seat 50. Ball 22 first fits against seat 50, therefore, along a ring circling the port at point 70. Figure 7 illustrates that geometry in exaggerated form.

Figure 7 illustrates seat 50 in its resting state. However, when seat 50 is compressed--because it is the downstream seat in a high-pressure situation--ball 22 has a tendency to elongate slightly, as the pressure presses it towards the outlet. Deformation of both ball 22 and seat 50, therefore, tends to force crack 68 closed, resulting in a greater area of contact between the ball and the seat, which reduces the wear on the seal and increases the pressure that the seal can handle.

The arrows in Figure 8 show the forces resulting from the fluid flow on the downstream side. Both the fluid pressure and the compression from plug 22 will force seat 50 against wall 52, maintaining the seals necessary to isolate channel 42 from the fluid in the body cavity formed by housing 10.

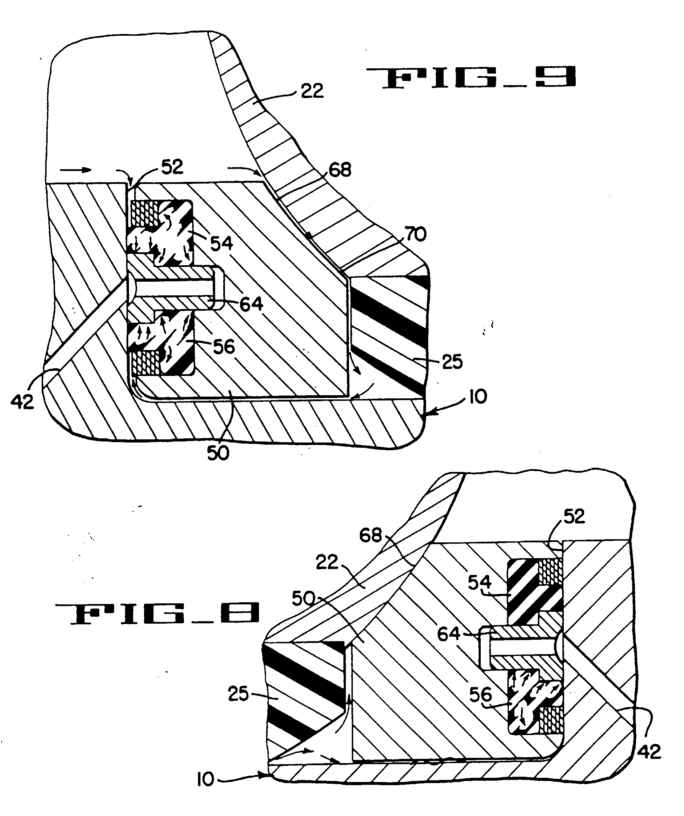

On the other side of the ball, when seat 50 is uncompressed--such as when it is the upstream seat in a high-pressure, non re-energized situation--the fluid pressure will force seat 50 against wall 52 and force ball 22 downstream, thereby opening crack 68 past point 70, as shown by the arrows in Figure 9, which represent fluid flow. Pressure will force seat 50 against wall 52 because the radius of the ball-seat contact ring, which passes through point 70, is preferably greater than the outer radius of inner seal 54. That geometry causes the pressure to break the ball-seat contact before it breaks the seal-wall contact.

The use of such a geometry (or the use of a small-diameter face seal 38 in the embodiment of Figure 1, as explained above) has the advantage of preventing the upstream seat from sealing against plug 22, unless one of channels 42 is re-energized. In standard valves with floating seats, the upstream seat can move against closed plug 22 when upstream fluid pressure is added, creating a secondary seals on the upstream side. That results in unnecessary wear on the upstream seat and the plug.

In addition, high-pressure fluid can be trapped in the body cavity, between the unintended, secondary, upstream seal and the primary, downstream seal. Such trapped fluid can create additional problems. The high pressure against the plug will heighten the torque required to turn the handle and can stress the steam seals. External heat, such as from fires or nearby high-temperature equipment, can expand the trapped fluid sufficiently to crack the valve housing.

The arrows in Figure 9 show the forces resulting from the fluid flow, demonstrating that the pressure will force seat 50 against wall 52 evenly, maintaining the seals necessary to isolate channel 42 from the flow through the valve. In addition, high-pressure fluid will press on seals 54 and 56 enough to cause them to flow, because they are made of a flexible material. However, such extrusion of seals 54 and 56 will result in pressure against the shelf of spacer 64. Because the pressure against seals 54 and 56 is equal, those seals will press spacer 64 against wall 52, at which point it will stop moving and act as another anti-extrusion ring, preventing deformation of seals 54 and 56.

Figure 10 and 11 illustrate additional alternative embodiments of the seat and seal assembly shown in Figure 7, shown in the same conditions. In place of an elongated spacer 64, which extends past the backs of seals 54 and 56 into a groove in seat 50, as shown in Figure 7, the embodiments of Figures 10 and 11 show optional triangular anti-extrusion rings 72 and anti-extrusion coil springs 74, respectively, either of which serves to prevent the seals from extruding into recess 76 behind spacer 64. The embodiment of Figure 7 has the advantage of avoiding the need for an additional part to keep the seals in place, but Figures 10 and 11 avoid the need to machine an additional groove in seat 50, which is necessary in the embodiment shown in Figure 7.

Although the best mode contemplated for carrying out the invention has been described, it is understood that numerous modifications, variations, and alternate forms and embodiments of the invention may be devised without departing from its scope as it is defined by the appended claims.

## Claims

1. A valve for controlling flow, comprising:
(a) a valve body (10) having an interior chamber and at least two ports (12, 14);
(b) a plug (22) retained generally within the interior chamber of the valve and including a bore (28) that can be selectively aligned with the two valve ports (12, 14) to define a flow passageway;
(c) two seats (50) surrounding the flow passageway, each located between the plug (22) and one of the ports (12. 14), and each shaped to be capable of contacting the plug along a seat-plug sealing line defining a closed figure; and
(d) at least two seals surrounding the flow passageway between the two of which an energizing channel (42) is arranged. each seal (54, 56) being associated with one of the seats (50) and shaped to be capable of contacting both the seats (50) and the valve body (10);
**characterized** in that
(e) said two seals are arranged as a pair of concentric seals (54, 56) contacting a single flat plane perpendicular to said flow passageway, each seal defining thereby a closed sealing line, at least one of said concentric closed sealing lines having a shorter length than the corresponding seat-plug sealing line of the associated seat.

2. The valve according to claim 1, wherein said interior chamber comprises a generally cube-shaped compartment.

3. The valve according to claim 1, wherein each said port (12, 14) is generally cylindrical.

4. The valve according to claim 1, wherein said plug (22) is a ball plug.

5. The valve according to claim 1, wherein said plug (22) is a cylindrical plug.

6. The valve according to claim 3, wherein said bore (28) has a diameter that is approximately equal to the diameter of each said port (12, 14).

7. The valve according to claim 1, wherein each said seat (50) has a port side, a plug side and a central opening having a diameter approximately equal to the diameter of said flow passageway; said port side and said plug side being generally perpendicular to said flow passageway.

8. The valve according to claim 1, wherein each said port side is adapted to receive said corresponding pair of concentric seals (54, 56) and each said plug side is adapted to receive said plug.

9. The valve according to claim 8, wherein each said plug side has a contoured portion shaped to sealingly engage said plug (22) along said seat-plug sealing line.

10. The valve according to anyone of the claims 1 to 9, wherein said pair of concentric seals (54, 56) is arranged downstream and upstream of said plug (22).

11. The valve according to claim 8, wherein each seal of said pair of seals (54, 56) is received in a generally circular groove on said port side wherein a portion of said seals extends beyond the surface of said port side contacting said valve body (10).

12. The valve according to anyone of claims 1 to 11, wherein said energizing channel (42) is arranged downstream and upstream of said plug (22).

13. The valve according to claim 12, wherein said energizing channels (42) are energizable independently.

14. The valve according to claims 12 or 13, wherein said energizing channels (42) are connectable to automatically controlled pumps.

15. The valve according to anyone of claims 1 to 14, wherein the radius of a plug-seat contact ring at a point (70) is greater than the outer radius of said seal (54).

## Patentansprüche

1. Ventil zum Steuern einer Strömung, welches aufweist:
(a) einen Ventilkörper (10) mit einer inneren Kammer und zumindest zwei Durchströmöffnungen (12, 14);
(b) einen Stopfen (22), welcher im allgemeinen innerhalb der inneren Kammer des Ventils gehalten ist und eine Bohrung (28) aufweist, welche selektiv mit den zwei Durchströmöffnungen (12, 14) ausgerichtet werden kann, um einen Strömungsdurchgang zu definieren;
(c) zwei Sitze (50), welche den Strömungsdurchgang umgeben, wobei jeder Sitz zwischen dem Stopfen (22) und einer der Durchströmöffnungen (12, 14) angeordnet ist und jeder der Sitze so ausgebildet ist, daß er den Stopfen entlang einer Sitz-Stopfen-Dichtlinie berührt, welche eine geschlossene Figur bildet; und
(d) zumindest zwei Dichtungen, welche den Strömungsdurchgang umgeben, zwischen welchen ein energetisierender Kanal (42) angeordnet ist, wobei jede Dichtung (54, 56) einem der Sitze (50) zugeordnet ist und so ausgebildet ist, daß sie beide Sitze (50) und den Ventilkörper (10) berühren kann;
**dadurch gekennzeichnet,** daß
(e) die zwei Dichtungen als ein Paar konzentrischer Dichtungen (54, 56) angeordnet sind, welche eine einzige flache Ebene berühren, welche senkrecht zu dem Strömungsdurchgang ist, und wobei jede Dichtung dadurch einen geschlossene Dichtlinie definiert, wobei zumindest eine der konzentrischen geschlossenen Dichtlinien eine kürzere Länge als die entsprechende Sitz-Stopfen-Dichtlinie des zugeordneten Sitzes aufweist.

2. Ventil nach Anspruch 1, bei welchem die innere Kammer einen im allgemeinen würfelförmigen Raum aufweist.

3. Ventil nach Anspruch 1, bei welchem jede der Durchströmöffnungen (12, 14) im allgemeinen zylindrisch ist.

4. Ventil nach Anspruch 1, bei welchem der Stopfen (22) ein kugelförmiger Stopfen ist.

5. Ventil nach Anspruch 1, bei welchem der Stopfen (22) ein zylindrischer Stopfen ist.

6. Ventil nach Anspruch 3, bei welchem die Bohrung (28) einen Durchmesser aufweist, welcher etwa gleich dem Durchmesser jeder der Durchströmöffnungen (12, 14) ist.

7. Ventil nach Anspruch 1, bei welchem jeder der Sitze (50) eine Durchströmöffnungsseite, eine Stopfenseite und eine zentrale Öffnung mit einem Durchmesser aufweist, welcher etwa gleich dem Durchmesser des Strömungsdurchganges ist, wobei die Durchströmseite und die Stopfenseite im allgemeinen senkrecht zu dem Strömungsdurchgang sind.

8. Ventil nach Anspruch 1, bei welchem jede Durchströmöffnungsseite so angepaßt ist, daß sie das entsprechende Paar konzentrischer Dichtungen (54, 56) aufnimmt, und jede Stopfenseite so angepaßt ist, daß sie den Stopfen aufnimmt.

9. Ventil nach Anspruch 8, bei welchem die Stopfenseite einen Konturabschnitt aufweist, welcher so ausgebildet ist, daß er den Stopfen (22) entlang der Sitz-Stopfen-Dichtlinie dichtend berührt.

10. Ventil nach einem der Ansprüche 1 bis 9, bei welchem das Paar konzentrischer Dichtungen (54, 56) stromabwärts und stromaufwärts von dem Stopfen (22) angeordnet ist.

11. Ventil nach Anspruch 8, bei welchem jede Dichtung des Paares von Dichtungen (54, 56) in einer im allgemeinen kreisförmigen Nut an der Durchströmöffnungsseite aufgenommen ist, in welcher ein Abschnitt der Dichtungen sich über die Oberfläche der Durchströmseite hinaus erstreckt, welche den Ventilkörper (10) berührt.

12. Ventil nach einem der Ansprüche 1 bis 11, bei welchem der energetisierende Kanal (42) stromabwärts und stromaufwärts von dem Stopfen (22) angeordnet ist.

13. Ventil nach Anspruch 12, bei welchem die energetisierenden Kanäle (42) unabhängig energetisierbar sind.

14. Ventil nach Anspruch 12 oder 13, bei welchem die energetisierenden Kanäle (42) mit automatisch gesteuerten Pumpen verbindbar sind.

15. Ventil nach einem der Ansprüche 1 bis 14, bei welchem der Radius eines Stopfen-Sitz-Kontaktringes an einem Punkt (70) größer ist als der äußere Radius der Dichtung (54).

## Revendications

1. Soupape pour commander un écoulement , comprenant :
(a) un corps de soupape (10) comprenant une chambre intérieure et au moins deux orifices (12, 14) ;
(b) un obturateur (22) retenu généralement à l'intérieur de la chambre interne de la soupape et présentant un trou (28) qui peut être aligné sélectivement avec les deux orifices de soupape (12, 14) pour définir un passage d'écoulement ;
(c) deux sièges (50) entourant le passage d'écoulement , placés chacun entre l'obturateur (22) et un des orifices (12, 14) , et configuré chacun en vue de pouvoir être en contact avec l'obturateur le long d'une ligne d'étanchéité siège-obturateur définissant une figure fermée ; et
(d) au moins deux joints d'étanchéité entourant le passage d'écoulement entre lesquels un canal d'activation (42) est disposé , chaque joint d'étanchéité (54, 56) étant associé à l'un des sièges (50) et configuré en vue de pouvoir être en contact à la fois avec les sièges (50) et le corps de soupape (10) ;
caractérisée en ce que
(e) lesdits deux joints d'étanchéité disposés comme une paire de joints concentriques (54, 56) , se trouvent en contact avec un seul plan plat perpendiculaire audit passage d'écoulement , chaque joint définissant, de ce fait, une ligne d'étanchéité fermée , une au moins desdites lignes d'étanchéité concentriques fermées ayant une longueur plus courte que la ligne d'étanchéité correspondante siège-obturateur du siège associé.

2. Soupape selon la revendication 1, dans laquelle ladite chambre interne comprend un compartiment configuré généralement en cube.

3. Soupape selon la revendication 1 , dans laquelle chaque dit orifice (12, 14) est généralement cylindrique.

4. Soupape selon la revendication 1, dans laquelle ledit obturateur (22) est un obturateur sphérique.

5. Soupape selon la revendication 1, dans laquelle ledit obturateur (22) est un obturateur cylindrique .

6. Soupape selon la revendication 3, dans laquelle ledit trou (28) présente un diamètre qui est approximativement égal au diamètre de chacun desdits orifices (12, 14).

7. Soupape selon la revendication 1, dans laquelle chaque dit siège (50) présente un côté orifice , un côté obturateur et une ouverture centrale présentant un diamètre approximativement égal au diamètre dudit passage d'écoulement ; ledit côté orifice et ledit côté obturateur étant généralemenr perpendiculaire audit passage d'écoulement .

8. Soupape selon la revendication 1, dans laquelle chaque dit côté orifice est adapté pour recevoir ladite paire correspondante de joints d'étanchéité concentriques (54, 56) et chaque dit côte obturateur est adapté pour recevoir ledit obturateur.

9. Soupape selon la revendication 8, dans laquelle chaque dit côté obturateur présente une partie profilée configurée pour engager de façon étanche ledit obturateur (22) le long de ladite ligne d'étanchéité siège-obturateur.

10. Soupape selon l'une quelconque des revendications 1 à 9, dans laquelle ladite paire de joints d'étanchéité concentriques (54, 56) est disposée en aval et en amont dudit obturateur (22).

11. Soupape selon la revendication 8, dans laquelle chaque joint de ladite paire de joints d'étanchéité (54, 56) est reçu dans une rainure généralement circulaire située sur ledit côté orifice dans laquelle une partie desdits joints s'étend au-delà de la surface dudit côté orifice se mettant en contact avec ledit corps de soupape (10).

12. Soupape selon l'une quelconque des revendications 1 à 11 , dans laquelle ledit canal d'activation (42) est disposé en aval et en amont dudit obturateur (22).

13. Soupape selon la revendication 12, dans laquelle lesdits canaux d'activation (42) peuvent être activés de façon indépendante.

14. Soupape selon les revendications 12 ou 13, dans laquelle lesdits canaux d'activation (42) peuvent être connectés à des pompes commandées automatiquement.

15. Soupape selon l'une quelconque des revendications 1 à 14, dans laquelle le rayon d'un anneau de contact obturateur-siège au niveau d'un point (70) est plus grand que le rayon extérieur dudit joint d'étanchéité (54).
